(19) Europäisches Patentamt
European Patent Office
Office européen des brevets

(11) **EP 3 301 410 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(51) Int Cl.:
*G01P 5/24* (2006.01)    *G01F 1/66* (2006.01)
*G01F 23/296* (2006.01)    *G01S 15/08* (2006.01)
*G01S 7/52* (2006.01)

(21) Anmeldenummer: **17188397.8**

(22) Anmeldetag: **29.08.2017**

(54) **LOKALISIEREN EINES EREIGNISSES IN EINEM SENSORSIGNAL**

LOCATION OF AN EVENT IN A SENSOR SIGNAL

LOCALISATION D'UN ÉVÉNEMENT AU NIVEAU DU SIGNAL DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2016 DE 102016118421**

(43) Veröffentlichungstag der Anmeldung:
**04.04.2018 Patentblatt 2018/14**

(73) Patentinhaber: **Sick AG**
**79183 Waldkirch (DE)**

(72) Erfinder:
• **Romero, Andrés**
**79110 Freiburg (DE)**
• **Schönwälder, David**
**79331 Teningen (DE)**

(56) Entgegenhaltungen:
**EP-A1- 2 226 615    EP-A1- 2 818 874**
**EP-A2- 0 797 105**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Lokalisieren eines Ereignisses in einem Sensorsignal nach dem Oberbegriff von Anspruch 1 sowie einen entsprechenden Sensor. Zur Auswertung von Sensorsignalen ist häufig erforderlich, ein Ereignis in dem Sensorsignal zu lokalisieren. Ein Beispiel ist die Bestimmung der zeitlichen Lage eines Pulses.

Ein solcher Zeitpunkt wird unter anderem für die Durchflussmessung eines Fluids in einer Leitung mittels Ultraschallmessung in einem Differenzlaufzeitverfahren benötigt. Dabei werden Ultraschallpulse von einem Paar Ultraschallwandler ausgesandt und empfangen, die einander gegenüber an einer Wandung der Leitung an den Enden eines Messpfads schräg zu der Strömung des Fluids angeordnet sind. Aus der Laufzeitdifferenz des Ultraschalls auf dem Messpfad mit der Strömung und in Gegenrichtung entgegen der Strömung wird die Strömungsgeschwindigkeit bestimmt. Für eine höhere Messgenauigkeit können auch zusätzliche Messpfade mit weiteren Ultraschallwandlern vorgesehen sein.

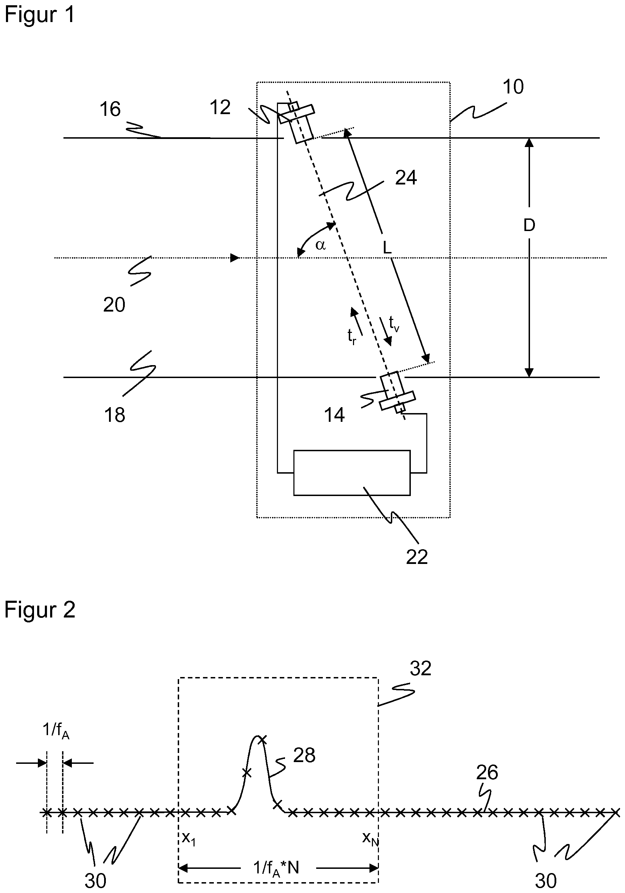

Dieses bekannte Messprinzip ist in Figur 1 dargestellt. In einer Messvorrichtung 10 sind zwei Ultraschallwandler 12, 14 in einem Winkel in der Wandung einer Rohrleitung 16 angeordnet, in der ein Fluid 18 in Pfeilrichtung 20 strömt. Die Ultraschallwandler 12, 14 arbeiten, von einer Steuer- und Auswertungseinheit 22 angesteuert, wechselweise als Sender und Empfänger. Die auf einem Messpfad 24 durch das Fluid 18 transportierten Ultraschallsignale werden in Strömungsrichtung beschleunigt und gegen die Strömungsrichtung abgebremst. Über nicht dargestellte Schaltungselemente, wie Verstärker und A/D-Wandler, werden der Steuer- und Auswertungseinheit 22 die jeweiligen Empfangssignale zugeführt und digital ausgewertet. Dazu wird die resultierende Laufzeitdifferenz gemäß

$$v = L/(2 \cos \alpha)\,(1/tv - 1/tr)$$

zu der gesuchten Strömungsgeschwindigkeit beziehungsweise gemäß

$$Q = v\ 1/4\ D^2\ \pi$$

zu einem Betriebsvolumenstrom verrechnet, worin die geometrischen Verhältnisse wie in Figur 1 durch die folgenden Variablen beschrieben sind:

v: Strömungsgeschwindigkeit des Fluids in der Leitung
L: Länge des Messpfades zwischen den beiden Ultraschallwandlern
α: Winkel, unter dem die Ultraschallwandler senden und empfangen

Q: Volumenstrom
D: Durchmesser der Leitung
tv: Laufzeit des Ultraschalls mit der Strömung
tr: Laufzeit des Ultraschalls gegen die Strömung.

Die Verbindung zum eingangs erläuterten Problem der Bestimmung eines Zeitpunkts eines Pulses in einem Sensorsignal bildet die Messung der Laufzeiten des Ultraschalls. Dazu muss der Empfangszeitpunkt als Pulslage innerhalb des Ultraschallsignals ermittelt werden. Da diese Auswertung digital erfolgt, wird das Ultraschallsignal zuvor abgetastet. Nun muss für eine präzise Bestimmung der Pulslage und damit der Laufzeit die Abtastfrequenz $f_A$ deutlich höher sein als die Signalfrequenz $f_P$ des Ultraschalls ($f_P \ll f_A$, in der Regel mindestens Faktor 10), damit der Puls ausreichend gut aufgelöst ist. Das bedeutet aber eine sehr große Anzahl von Datenpunkten mit entsprechend langsamer Auswertung.

Eine Lösung besteht darin, nicht das gesamte Ultraschallsignal eines Messzyklus' zu untersuchen, sondern die Auswertung auf ein gewisses Abtastfenster zu beschränken, in dem der Puls liegt. Das beschleunigt die Auswertung im Betrieb erheblich. Dafür muss natürlich zuvor das betreffende Abtastfenster festgelegt werden. Diese Suche ist zeitaufwändig und kann unter Umständen länger sein als die Dauer des Messzyklus'. Während des Suchvorgangs ist keine Messung möglich. Solange der Durchflussmesser mit einem festen Medium unter konstanten Umgebungsbedingungen arbeitet, ist eine lange Initialisierungszeit hinnehmbar, in welcher der Sensor nicht messfähig ist.

Es besteht aber der Bedarf an Durchflussmessern, die auch eine Bandbreite an verschiedenen Medien vermessen. Durch unterschiedliche Schallgeschwindigkeiten ergeben sich unterschiedliche Laufzeiten der verschiedenen Medien. Die Pulsposition hängt von den Schallgeschwindigkeiten in den zu vermessenden Medien ab, wobei auf die Schallgeschwindigkeit selbst mehrere Parameter wie Viskosität, Temperatur oder Druck Einfluss nehmen. Ändern sich demnach das Medium oder einer dieser Parameter, so muss auch das Abtastfenster neu bestimmt werden. Diese Anpassung ist aber nur unter vorübergehendem Verlust der Messfähigkeit möglich. Deshalb ist ein Medienwechsel im laufenden Messbetrieb nicht möglich. Man kann dies umgehen, indem die zu vermessenden Medien eingelernt werden, was aber die Flexibilität und den Bedienkomfort deutlich einschränkt.

Die EP 0 797 105 A2 offenbart ein Verfahren zur Laufzeitmessung eines Signals zur Anwendung bei Ultraschall-Durchflussmessern. Dabei wird zunächst eine Abtastrate größer als die zweifache Bandbreite des Nutzsignals gewählt, um mit vergleichsweise geringer Speichertiefe den gesamten für die Messung relevanten Bereich des Empfangssignals auszuwerten. Dann wird ein kleineres Messfenster generiert, in dem eine hochauflösende Abtastung mit einer mindestens vierfach, vorzugsweise mehr als zehnfach größeren Abtastrate als die Trägerfrequenz des Nutzsignals erfolgt.

Aus der EP 2 226 615 A1 ist ein Verfahren zur Füllstandmessung bekannt, welches das Generieren einer Echokurve und das Analysieren der Echokurve mit einem Analyseverfahren aufweist. Dabei kann durch Abtrennung und parallele Verarbeitung der Echovermessung von der Nutzechoidentifikation die Sensormessrate erhöht werden.

Die EP 2 818 874 A1 beschreibt eine Ultraschallmessvorrichtung, in der ein erster Wert für eine Laufzeitdifferenz bestimmt wird, um damit die Suche nach einem Maximum der für die Messung berechneten Kreuzkorrelation auf ein kleines Zeitfenster zu beschränken.

Es ist deshalb Aufgabe der Erfindung, eine Möglichkeit zu finden, ein Ereignis schneller in einem Sensorsignal zu lokalisieren.

Diese Aufgabe wird durch ein Verfahren zum Lokalisieren eines Ereignisses in einem Sensorsignal nach dem Anspruch 1 sowie einen entsprechenden Sensor nach Anspruch 7 gelöst. Das Ereignis ist im Allgemeinen ein beliebiges Charakteristikum des Sensorsignals, häufig ein Maximum oder, bei Betrachtung eines invertierten Sensorsignals, ein Minimum, das beispielsweise von einem Puls erzeugt ist. Die Auswertung in der Betriebsphase wird auf ein Abtastfenster beschränkt, d.h. ein zeitliches Intervall mit einer bestimmten Anzahl aufeinanderfolgender Abtastpunkte. Die Dauer des Sensorsignals ist folglich wesentlich größer und beträgt insbesondere ein Zwei- oder sonstiges Vielfaches der Dauer des Abtastfensters, wobei kein ganzzahliges oder auch nur rationales Verhältnis gefordert ist.

Die Erfindung geht nun von dem Grundgedanken aus, das Sensorsignal in der Initialisierungsphase gröber abzutasten als in der Betriebsphase. Indem das Sensorsignal mit der geringeren Initialisierungsfrequenz abgetastet wird, kann das gesamte Sensorsignal mit deutlich weniger Datenpunkten erfasst und damit das Abtastfenster rasch aufgefunden werden. In der Betriebsphase dagegen wird die höhere Arbeitsfrequenz zur Abtastung verwendet, um präzise zu messen.

Die Erfindung hat den Vorteil, dass die eigentliche Auswertung sich auf das Abtastfenster und damit nur einen Bruchteil des Sensorsignals bezieht. Daraus resultiert eine besonders schnelle Messung bei gleichbleibender Qualität der Messdaten. Die geringere Initialisierungsfrequenz ermöglicht eine schnelle Umstellung bei einem neuen Medium beziehungsweise geänderten Messbedingungen. Ein Einlernen von spezifischen Mediumsparametern ist nicht nötig, so dass das Verfahren flexibel und komfortabel ist.

Vorzugsweise wird in der Initialisierungsphase das gesamte Sensorsignal abgetastet. Damit ist gewährleistet, dass die Datenpunkte das Ereignis tatsächlich einschließen. Allerdings ist ebenso denkbar, einen Abschnitt zu wählen, in dem aufgrund von Vorwissen das Ereignis liegen muss. Beispielsweise kann ein Randabschnitt weggelassen werden, in dem das Ereignis aus physikalischen Gründen unabhängig von der konkreten Messsituation noch nicht oder nicht mehr liegen kann. Der derart gewählte Abschnitt ist natürlich immer noch deutlich größer als das Abtastfenster, denn andernfalls wäre die Initialisierungsphase überflüssig.

Das Sensorsignal ist bevorzugt ein Empfangssignal eines Ultraschallwandlers eines Ultraschall-Durchflussmessers. In der Betriebsphase wird in dem Abtastfenster ein Empfangszeitpunkt festgestellt, um aus den derart gemessenen Laufzeiten nach dem eingangs erläuterten Differenzlaufzeitverfahren die Strömungsgeschwindigkeit zu errechnen.

In der Initialisierungsphase wird erfindungsgemäß die Dauer des Sensorsignals in mehrere Prüf-Abtastfenster unterteilt, das Sensorsignal in den Prüf-Abtastfenstern mit der Initialisierungsfrequenz abgetastet und anschließend das Abtastfenster als dasjenige Prüf-Abtastfenster festgelegt, in dem das Ereignis erkannt wird. Man teilt demnach von Anfang an die Dauer des Sensorsignals in einem Abtastfenster entsprechende Zeitintervalle auf und sucht dann anschließend das passende Zeitintervall heraus. Die Dauer des Sensorsignals ist beispielsweise durch einen Messzyklus vorgegeben, oder eine beliebige andere Dauer, innerhalb derer das Ereignis voraussichtlich eintritt. Die Unterteilung muss nicht ohne Rest aufgehen, beispielsweise können Restbereiche am Anfang oder Ende ganz unberücksichtigt bleiben, in denen das Ereignis sicher nicht auftritt. Auch ist nicht ausgeschlossen, das Prüf-Abtastfenster oder das schlussendlich festgelegte Abtastfenster noch zu verschieben, also das anfängliche Raster aus Prüf-Abtastfenstern noch anzupassen oder zu verlassen.

Das Sensorsignal wird erfindungsgemäß bis in die Sättigung verstärkt und anhand dessen ausgewertet, in welchen Prüf-Abtastfenstern die Amplitude des Sensorsignals eine erste Schwelle überschreitet, wobei die übrigen Prüf-Abtastfenster verworfen werden. Der dazu erforderliche Verstärkungsfaktor kann vorab festgelegt werden und beispielsweise die maximale Verstärkung eines analogen Verstärkers für das Sensorsignal sein. Nur Prüf-Fenster, in denen zumindest bei dieser Verstärkung die Amplitude des Sensorsignals eine erste Schwelle eines Mindestsignals überschreitet, kommen als Abtastfenster in Betracht, denn die übrigen Prüf-Fenster haben offenbar kein merkliches Messergebnis erfasst und enthalten daher auch nicht das Ereignis.

Vorzugsweise wird iterativ die Verstärkung verringert, bis nur noch ein Prüf-Abtastfenster verbleibt oder bis höchstens noch zwei Prüf-Abtastfenster verbleiben und darin die Amplitude des Sensorsignals eine zweite Schwelle unterschreitet. In jeder Iteration werden die noch verbleibenden Prüf-Abtastfenster mit sukzessive geringerer Verstärkung untersucht. Bei entsprechend geringer Verstärkung wird auch das Ereignis, beispielsweise ein Puls, unter die zweite Schwelle einer Maximalamplitude fallen. Da der Puls kurz gegenüber der Dauer des Abtastfensters ist, verbleibt dann nur noch ein Prüf-Abtastfenster. Eine Ausnahme ergibt sich, wenn der Puls zufällig auf einen Übergangsbereich zweier Prüf-Abtastfenster fällt. Ein Vorteil der Suche über eine iterative Verstärkungsanpassung ist, dass nicht nur das Abtastfenster aufgefunden wird, sondern zugleich auch ein optimaler Verstärkungsfaktor für die Betriebsphase, bei dem das Sensorsignal weder übersteuert noch zu schwach ist.

Für den Fall, dass nur noch ein Prüf-Abtastfenster verbleibt, wird bevorzugt das Abtastfenster als dieses Prüf-Abtastfenster festgelegt. In diesem Fall liegt das Ereignis gerade in dem verbleibenden Prüf-Abtastfenster. Das Verfahren kann optional noch fortgesetzt werden, bis die Amplitude des Sensorsignals die zweite Schwelle unterschreitet. Damit kann beispielsweise ein Verstärkungsfaktor für einen analogen Verstärker aufgefunden werden.

Alternativ wird für den Fall, dass bei Unterschreiten der zweiten Schwelle noch zwei Prüf-Abtastfenster verbleiben, das Abtastfenster so festgelegt, dass es den Übergangsbereich zwischen diesen beiden Prüf-Abtastfenstern umfasst. Das ist gerade der oben schon angesprochene Ausnahmefall. Hier ist keines der ursprünglich eingeteilten Prüf-Abtastfenster geeignet, sondern es wird ein neues Abtastfenster zwischen den beiden verbleibenden Prüf-Abtastfenstern festgelegt, beispielsweise von der Mitte des früheren der beiden verbleibenden Prüf-Abtastfenster bis zur Mitte des späteren verbleibenden Prüf-Abtastfensters.

Vorzugsweise wird in der Initialisierungsphase das Ereignis in dem Abtastfenster lokalisiert und das Abtastfenster um das Ereignis zentriert. Das ist eine Feinjustierung, nachdem ein Abtastfenster mit dem Ereignis bereits aufgefunden ist. Um spätere Toleranzen beispielsweise durch Temperatureffekte möglichst gut aufzufangen, ist es vorteilhaft, wenn das Abtastfenster auch viele Abtastpunkte zu beiden Seiten des Ereignisses aufweist. Umgekehrt ist eine Randlage des Ereignisses eher ungünstig, da es sich zumindest teilweise aus dem Abtastfenster schieben könnte. Deshalb wird das Abtastfenster noch um einen Bruchteil seiner Dauer verschoben, damit das Ereignis möglichst in der Mitte liegt.

Ein erfindungsgemäßer Sensor umfasst eine Sensoreinheit zum Erfassen eines Sensorsignals und eine Auswertungseinheit, in der das Verfahren zum Lokalisieren eines Ereignisses in dessen Sensorsignal implementiert ist. Dabei kann das Verfahren in allen erläuterten Varianten umgesetzt sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung eines Ultraschall-Durchflussmessers zur Erläuterung des Differenzlaufzeitverfahrens;

Fig. 2    eine schematische Darstellung eines Sensorsignals mit einem Ereignis in Form eines Pulses zur Illustration eines Abtastfensters;

Fig. 3    eine Illustration einer iterativen Suche nach einem Abtastfenster, das das Ereignis umfasst, mit sukzessivem Absenken der Verstärkung;

Fig. 4    eine Illustration entsprechend Figur 3, jedoch mit einem Ereignis im Übergang zweier Abtastfenster; und

Fig. 5    eine Illustration einer Feinjustierung eines Abtastfensters durch Lokalisierung des Ereignisses innerhalb des Abtastfensters.

Das im Anschluss unter Bezugnahme auf die Figuren 2 bis 5 erläuterte erfindungsgemäße Verfahren findet beispielsweise Anwendung in einem Sensor oder einer Messvorrichtung 10, die als Ultraschall-Durchflussmesser ausgebildet ist und einleitend anhand der Figur 1 erläutert wurde. Die Erfindung ist aber darauf nicht beschränkt, sondern ebenso bei anderen Sensoren einsetzbar, bei denen ein bestimmtes Ereignis in deren Sensorsignal lokalisiert werden soll, beispielsweise ein Extremum, eine Null- oder Wendestelle oder allgemein ein bestimmter funktionaler kontinuierlicher oder diskreter (Teil-)Verlauf. Das sind insbesondere Sensoren, die Laufzeiten von Pulsen messen, wie etwa entfernungsmessenden optoelektronischen Sensoren auf Basis von Lichtlaufzeitverfahren (TOF, time of flight) oder Füllstandsensoren nach dem Prinzip der Zeitbereichsreflektometrie (TDR, time domain reflectometry).

Figur 2 zeigt ganz schematisch ein rein beispielhaftes Sensorsignal 26 mit einem Puls 28. Es wird vereinfachend von einem Puls 28 gesprochen, obwohl es sich nicht um einen Signalpuls handeln muss. Damit sind nicht nur die Abstraktionen des vorigen Abschnitts gemeint. Gerade im Fall von Ultraschall wird üblicherweise kein Einzelpuls ausgesandt, sondern ein Pulspaket. Dann handelt es sich eigentlich nicht um einen Puls 28, sondern um die Hüllkurve dieses Pulspakets. Diese Unterscheidung wird im Folgenden vernachlässigt, da sie für das Verständnis der Erfindung keine Rolle spielt. Ein Pulspaket ist ebenso wie ein Puls 28 ein zu lokalisierendes Ereignis, und eine pulsartige Hüllkurve unterscheidet sich praktisch nicht von einem Puls 28.

Das Sensorsignal 26 wird zur digitalen Auswertung mit einem nicht dargestellten A/D-Wandler abgetastet. Die Abtastpunkte 30 weisen untereinander einen gleichen zeitlichen Abstand auf, der durch den Kehrwert der Abtastfrequenz $1/f_A$ festgelegt ist. Die Abtastfrequenz $f_A$ muss groß genug sein, dass der Puls 28 mit jedenfalls einem, besser vielen Abtastpunkten 30 erfasst ist, um die Pulslage präzise messen zu können. Da in der Praxis der Puls 28 anders als dargestellt kurz gegen die Dauer des Sensorsignals 26 ist, resultiert dann insgesamt eine sehr große Anzahl von Abtastpunkten 30, welche die Auswertung unnötig komplex macht.

Deshalb wird die Auswertung im Betrieb auf ein Abtastfenster 32 um den Puls 28 herum beschränkt. Das Abtastfenster besteht aus den Abtastpunkten $x_1...x_N$ und hat folglich die Dauer $N/f_A$. Es ist nun durch Initialisierung sicherzustellen, dass sich der Puls 28 tatsächlich innerhalb des Abtastfensters 32 befindet. Diese Initialisierung benötigt sehr viel Zeit, da hier doch wieder sämtliche Abtastpunkte 30 ausgewertet werden müssen.

Um eine möglichst kurze Ansprechzeit des Sensors auch während der Initialisierung beispielsweise nach Medienwechsel zu gewährleisten, wird erfindungsgemäß für die Suche nach dem Abtastfenster 32 eine Initialisierungsfrequenz $f_I$ für die Abtastung verwendet, die deutlich kleiner als die Arbeitsfrequenz $f_A$ für die Abtastung während des Messbetriebes ist. Für spürbare Gewinne sollte die Initialisierungsfrequenz $f_I$ vorzugsweise so klein wie möglich, jedoch noch groß genug sein, um das Ereignis noch zu erfassen, beispielsweise nur halb so groß sein, wie die Arbeitsfrequenz $f_A$ oder sogar noch geringer.

Im Messbetrieb würde eine Verringerung der Arbeitsfrequenz $f_A$ zu einer Verschlechterung der Auflösung und somit der Messgenauigkeit führen. Da jedoch während der Initialisierung keine Durchflussmessung stattfindet, ist die geringere Initialisierungsfrequenz $f_I$ nicht kritisch. Im Gegenteil sorgen die unterschiedlichen Abtastfrequenzen $f_I$, $f_A$ dafür, dass in beiden Phasen die Ziele optimal unterstützt werden: in der Initialisierung eine rasche Suche und im Messbetrieb eine präzise Lokalisierung des Pulses 28 und damit eine genaue Messung. Die unterschiedlichen Abtastfrequenzen $f_I$, $f_A$ werden beispielsweise über einen PLL-Multiplexer realisiert, der auf einem FPGA (Field Programmable Gate Array) der Steuer- und Auswertungseinheit 22 realisiert sein kann und die Taktfrequenz für den A/D-Wandler vorgibt.

In einer Ausführungsform der Erfindung wird anfänglich das gesamte Sensorsignal 26 oder jedenfalls ein großer Abschnitt, in dem sich der Puls 28 in jedem realistischen Fall befindet, abgetastet und die Lage des Pulses 28 bestimmt. Dazu kann das gleiche Verfahren genutzt werden wie später im Betrieb, lediglich auf diskreten Datenpunkten mit schlechterer Zeitauflösung. Anschließend wird das Abtastfenster 32 so gelegt, dass es den Puls 28 umfasst, beispielsweise mit Beginn eine halbe Dauer des Abtastfensters 32 vor dem Puls 28.

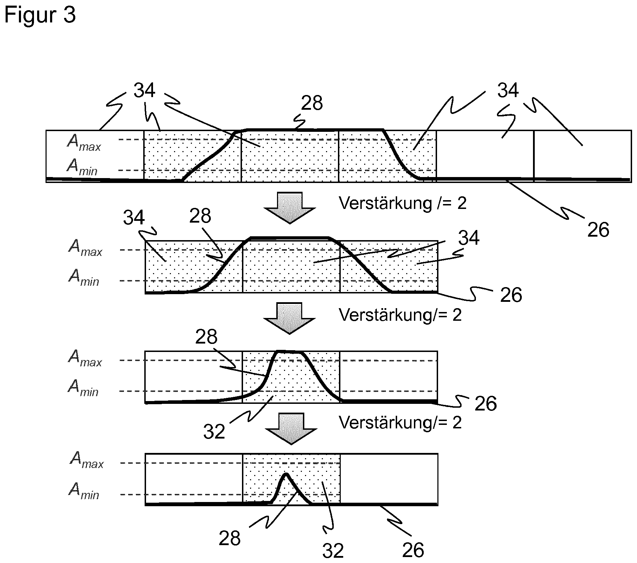

Figur 3 erläutert eine weitere Ausführungsform, die besonders einfach zu implementieren ist und den zusätzlichen Vorteil hat, dass zugleich mit der Lage des Abtastfensters 32 auch ein optimaler Verstärkungsfaktor für eine analoge Verstärkung des Sensorsignals 26 gefunden werden kann.

Dazu wird, wie in der obersten Zeile gezeigt, anfänglich die Dauer des Sensorsignals 26 in mehrere Abtastfenster unterteilt, die genaugenommen zur Unterscheidung von dem gesuchten Abtastfenster 32 als vorläufige Abtastfenster oder Prüf-Abtastfenster 34 bezeichnet werden müssen. Außerdem wird eine sehr große Verstärkung eingestellt, beispielsweise der maximale Verstärkungsfaktor eines analogen Verstärkers für das Sensorsignal 26. Diese Verstärkung führt dazu, dass der Puls 28 in die Sättigung getrieben wird, und der Puls 28 kann sich über mehrere Prüf-Abtastfenster 34 ausdehnen.

Nun wird in jedem Prüf-Abtastfenster 34 die Amplitude des Sensorsignals 26 untersucht. Diejenigen Prüf-Abtastfenster 34, in denen die Amplitude eine Grenzamplitude $A_{min}$ überschreitet, werden zunächst markiert, wie durch Grauschattierung dargestellt. Die übrigen, hier weiß dargestellten Prüf-Abtastfenster 34 enthalten keine relevanten Signalanteile und damit insbesondere nicht den Puls 28.

Im nächsten Schritt, wie in der zweiten Zeile gezeigt, werden nur noch die markierten Prüf-Abtastfenster 34 näher untersucht, wobei der Verstärkungsfaktor deutlich herabgesetzt, beispielsweise halbiert wird. Erneut wird in jedem verbliebenen Prüf-Abtastfenster 34 das Sensorsignal 26 mit der Grenzamplitude $A_{min}$ verglichen, und die entsprechenden Prüf-Abtastfenster 34 werden markiert. In diesem Beispiel verbleiben im zweiten Schritt alle Prüf-Abtastfenster.

Dieses Vorgehen wird iterativ fortgesetzt. Im dritten Schritt beziehungsweise der dritten Zeile des dargestellten Beispiels bleibt nur noch ein einziges Prüf-Abtastfenster 34 übrig, welches als das gesuchte Abtastfenster 32 ausgewählt wird. Dennoch wird das Verfahren noch einen Schritt weitergeführt, bis die Amplitude des Sensorsignals 26 unter eine obere Grenzamplitude $A_{min}$ gefallen ist. Dieser letzte Teil des Verfahrens dient nicht mehr dem Auffinden des Abtastfensters 32, sondern der Einstellung der Verstärkung und kann daher auch entfallen.

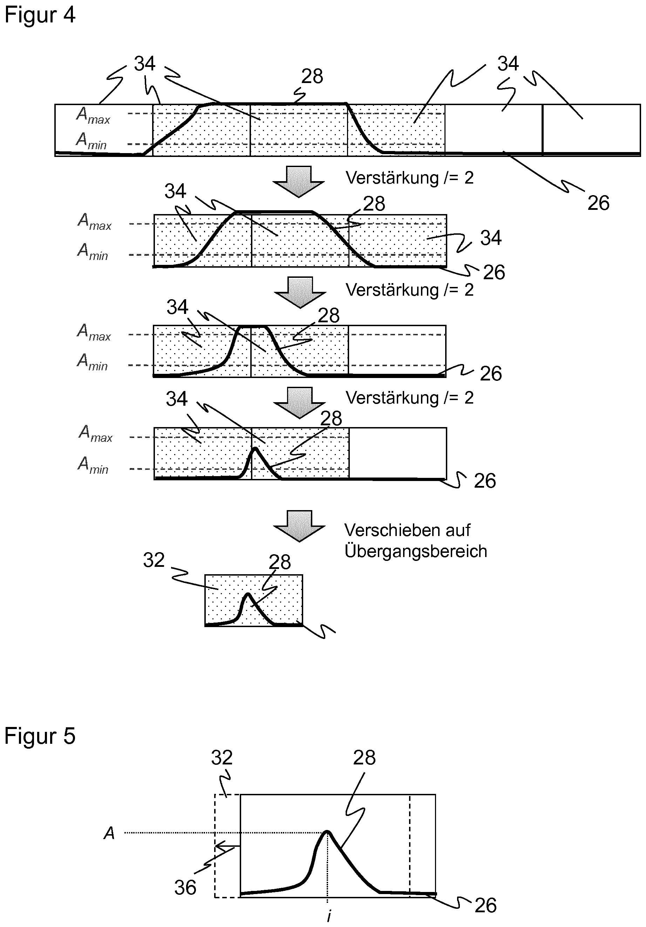

Figur 3 zeigt einen Fall, in dem das Verfahren den Puls 28 eindeutig einem einzigen Prüf-Abtastfenster 34 zuordnet. Es kann aber auch passieren, dass sich der Puls 28 auch dann noch über zwei Prüf-Abtastfenster 34 erstreckt, wenn seine Amplitude unter die obere Grenzamplitude $A_{min}$ gefallen ist. Dieser Fall ist in Figur 4 illustriert. Der Puls 28 befindet sich im Übergang zweier Prüf-Abtastfenster 34.

Deshalb folgt abschließend noch eine Verschiebung: Als Abtastfenster 32 wird keines der beiden übrig gebliebenen Prüf-Abtastfenster 34 gewählt, sondern ein neues Abtastfenster 32, welches den Übergangsbereich mit dem Puls 28 umfasst. Dieses Abtastfenster 32 erstreckt sich beispielsweise von der Mitte des einen verbliebenen Prüf-Abtastfensters 34 zur Mitte des anderen verbliebenen Prüf-Abtastfensters 34.

Folglich hat die Iteration eine mehrfache Abbruchbedingung. Wenn nur ein Prüf-Abtastfenster 34 übrig bleibt, ist dies das gesuchte Abtastfenster 32. Optional wird dennoch der Verstärkungsfaktor weiter herabgesetzt, bis die Amplitude unter die obere Grenzamplitude $A_{min}$ fällt. Das ist der in Figur 3 gezeigte Fall. Solange noch zwei Prüf-Abtastfenster 34 übrig sind, wird weiter iteriert, bis entweder nur noch ein Prüf-Abtastfenster 34 verbleibt, womit wieder der in Figur 3 gezeigte Fall erreicht ist, oder bis die Amplitude unter die obere Grenzamplitude $A_{min}$ fällt. Letzteres ist dann der in Figur 4 gezeigte Fall.

Als einfaches Zahlenbeispiel sei ein Sensorsignal 26 angenommen, das bei der Arbeitsfrequenz $f_A$ insgesamt fünfzehn mal so groß ist wie das gewählte Abtastfenster 32. Wählt man dann eine um einen Faktor 2 ½ geringere Initialisierungsfrequenz $f_I$, so wird das Sensorsignal 26 bereits durch nur sechs Prüf-Abtastfenster 34 abgedeckt. Das Abtastfenster 32 beziehungsweise Prüf-Abtastfenster 34 definiert sich ja durch seine konstante Anzahl von Abtastpunkten 30, so dass die Verringerung der Frequenz linear zu einer Verlängerung der Prüf-Abtastfenster 34 führt. Bei der Abtastfrequenz $f_A$ selbst hätte man dagegen fünfzehn Prüf-Abtastfenster 34 untersuchen müssen. Da die Abtast- und Auswertezeiten für ein Prüf-Abtastfenster 34 konstant bleiben, kann also die Initialisierung praktisch um den Faktor 2 ½ beschleunigt werden. Die Verbreiterung der Prüf-Abtastfenster 34 durch die verringerte Initialisierungsfrequenz $f_I$ hat auch den Vorteil, dass der Puls 28 mit höherer Wahrscheinlichkeit in einem einzigen Prüf-Abtastfenster 34 liegt, womit die Iteration früher abgebrochen werden kann und der etwas kompliziertere Fall gemäß Figur 4 seltener eintritt.

Figur 5 illustriert noch eine Feinjustierung des aufgefundenen Abtastfensters 32, die sich der Suche gemäß Figur 3 und 4 optional anschließen kann. Dazu wird in dem Abtastfenster 32 das Maximum A des Pulses 28 und daraus dessen zeitliche Lage i bestimmt. Dabei genügt es häufig, die Lage i diskret zu bestimmen, also denjenigen Abtastpunkt 30 mit maximaler zugehöriger Amplitude zu identifizieren. Prinzipiell ist aber auch eine genauere Lokalisierung beispielsweise durch Funktionsfit denkbar.

Anschließend wird das Abtastfenster 32 noch einmal verschoben, und zwar so, dass es auf die Lage i zentriert wird, wie durch Pfeil 36 angedeutet. Rechnerisch kann dazu einfach von der Lage i die halbe Dauer eines Abtastfensters 32 abgezogen und dorthin der neue Beginn des Abtastfensters 32 gelegt werden.

Das beschriebene Verfahren ist prinzipiell als Ganzes über mehr als zwei Frequenzen iterierbar. Es ist also denkbar, vor das beschriebene Verfahren zum Auffinden des Abtastfensters 32 ein analoges Verfahren mit einer noch gröberen Abtastfrequenz zu stellen, um zunächst einen relevanten Teilbereich des Sensorsignals 26 zu finden. In der Praxis wird aber meistens die eine zusätzliche Initialisierungsfrequenz genügen, zumal eine zu grobe Frequenz auch dazu führen kann, dass der Puls 28 durch zu wenige Abtastpunkte 30 repräsentiert ist oder gar nicht mehr getroffen wird und deshalb zu schwach erfasst ist, um ihn überhaupt vor einem Rauschhintergrund noch zu finden.

Alternativ zu einer Suche mit Prüf-Abtastfenstern 34, die durch eine verringerte Initialisierungsfrequenz $f_I$ verbreitert sind, könnten im Prinzip auch größere Prüf-Abtastfenster durch eine variable beziehungsweise größere Anzahl von Abtastpunkten 30 erreicht werden. Auch dann müssen weniger Prüf-Abtastfenster 34 untersucht werden, und der Puls 28 liegt mit höherer Wahrscheinlichkeit innerhalb eines einzigen Prüf-Abtastfensters 34. Da auf diesem Weg aber die Gesamtzahl an Abtastpunkten 30 nicht verringert wird, steigt die Auswertungszeit für das einzelne Prüf-Abtastfenster 34, und der effektive Gewinn ist sehr gering, insbesondere deutlich geringer als bei den oben beschriebenen Ausführungsformen.

**Patentansprüche**

1. Verfahren zum Lokalisieren eines Ereignisses (28), insbesondere eines Pulses, in einem Sensorsignal (26), bei dem in einer Initialisierungsphase ein das Ereignis (28) umfassendes Abtastfenster (32) festgelegt wird, dessen Dauer nur einen Bruchteil derjenigen des Sensorsignals (26) beträgt, wobei das Sensorsignal (26) in einer Betriebsphase innerhalb des Abtastfensters (32) mit einer Arbeitsfrequenz ($f_A$) abgetastet und das so gewonnene diskrete Sensorsignal (26, 30) ausgewertet wird, um das Ereignis (28) zu lokalisieren, wobei das Sensorsignal (26) in der Initialisierungsphase mit einer Initialisierungsfrequenz ($f_I$) kleiner der Arbeitsfrequenz ($f_A$) abgetastet wird, wobei in der Initialisierungsphase die Dauer des Sensorsignals (26) in mehrere Prüf-Abtastfenster (34) unterteilt, das Sensorsignal (26) in den Prüf-Abtastfenstern (34) mit der Initialisierungsfrequenz ($f_I$) abgetastet und anschließend das Abtastfenster (32) als dasjenige Prüf-Abtastfenster (34) festgelegt wird, in dem das Ereignis (28) erkannt wird,
**dadurch gekennzeichnet,**
**dass** das Sensorsignal (26) bis in die Sättigung verstärkt und anhand dessen ausgewertet wird, in welchen Prüf-Abtastfenstern (34) die Amplitude des Sensorsignals (26) eine erste Schwelle ($A_{min}$) überschreitet, wobei die übrigen Prüf-Abtastfenster (34) verworfen werden.

2. Verfahren nach Anspruch 1,
wobei das Sensorsignal (26) ein Empfangssignal eines Ultraschallwandlers (12, 14) eines Ultraschall-Durchflussmessers (10) ist.

3. Verfahren nach Anspruch 1 oder 2,
wobei iterativ die Verstärkung verringert wird, bis nur noch ein Prüf-Abtastfenster (34) verbleibt oder bis höchstens noch zwei Prüf-Abtastfenster (34) verbleiben und darin die Amplitude des Sensorsignals (26) eine zweite Schwelle ($A_{max}$) unterschreitet.

4. Verfahren nach Anspruch 3,
wobei für den Fall, dass nur noch ein Prüf-Abtastfenster (34) verbleibt, das Abtastfenster (32) als dieses Prüf-Abtastfenster (34) festgelegt wird.

5. Verfahren nach Anspruch 3,
wobei für den Fall, dass bei Unterschreiten der zweiten Schwelle ($A_{max}$) noch zwei Prüf-Abtastfenster (34) verbleiben, das Abtastfenster (32) so festgelegt wird, dass es den Übergangsbereich zwischen diesen beiden Prüf-Abtastfenstern (34) umfasst.

**6.** Verfahren nach einem der vorhergehenden Ansprüche,
wobei in der Initialisierungsphase das Ereignis (28) in dem Abtastfenster (32) lokalisiert und das Abtastfenster (32) um das Ereignis (28) zentriert wird.

**7.** Sensor (10) mit einer Sensoreinheit (12, 14) zum Erfassen eines Sensorsignals (26) und mit einer Auswertungseinheit (22) zur Auswertung des Sensorsignals (26), wobei die Auswertungseinheit (22) zum Lokalisieren eines Ereignisses (28), insbesondere eines Pulses, in dem Sensorsignal (26) gemäß einem Verfahren nach einem der vorhergehenden Ansprüche ausgebildet ist.

**8.** Sensor nach Anspruch 7,
wobei der Sensor ein optoelektronischer entfernungsmessender Sensor nach einem Lichtlaufzeitverfahren, ein Füllstandsensor oder ein Ultraschall-Durchflussmesser (10) ist.

**Claims**

**1.** A method for locating an event (28), in particular a pulse, in a sensor signal (26), wherein, in an initialization phase, a scanning window (32) comprising the event (28) is defined, the duration of the window (32) being only a fraction of that of the sensor signal (26), wherein the sensor signal (26) is scanned in an operating phase within the scanning window (32) at an operating frequency ($f_A$) and the discrete sensor signal (26, 30) thus obtained is evaluated in order to locate the event (28), wherein the sensor signal (26) is sampled in the initialization phase at an initialization frequency ($f_I$) smaller than the operating frequency ($f_A$), wherein in the initialization phase the duration of the sensor signal (26) is divided into a plurality of test sampling windows (34), the sensor signal (26) is sampled in the test sampling windows (34) at the initialization frequency (fi) and then the sampling window (32) is set as that test sampling window (34) in which the event (28) is detected, **characterized in that** the sensor signal (26) is amplified to saturation and evaluated on the basis of in which test sampling windows (34) the amplitude of the sensor signal (26) exceeds a first threshold ($A_{min}$), wherein the remaining test sampling windows (34) are discarded.

**2.** The method according to claim 1,
wherein the sensor signal (26) is a reception signal of an ultrasonic transducer (12, 14) of an ultrasonic flowmeter (10).

**3.** The method according to claim 1 or 2,
wherein the gain is reduced iteratively until only one test sampling window (34) remains or until at most two test sampling windows (34) remain and therein the amplitude of the sensor signal (26) falls below a second threshold ($A_{max}$).

**4.** The method according to claim 3,
wherein in case that only one test sampling window (34) remains, the sampling window (32) is set as that test sampling window (34).

**5.** The method according to claim 3,
wherein in case that two test sampling windows (34) remain when the amplitude of the sensor signal (26) falls below the second threshold ($A_{max}$), the sampling window (32) is determined to comprise the transition region between these two test sampling windows (34).

**6.** The method according to one of the preceding claims,
wherein, in the initialization phase, the event (28) is localized in the sampling window (32) and the sampling window (32) is centered around the event (28).

**7.** A sensor (10) having a sensor unit (12, 14) for detecting a sensor signal (26) and having an evaluation unit (22) for evaluating the sensor signal (26), wherein the evaluation unit (22) is configured for locating an event (28), in particular a pulse, in the sensor signal (26) with a method according to one of the preceding claims.

**8.** The sensor according to claim 7,
wherein the sensor is an optoelectronic distance-measuring sensor according to a time-of-flight method, a level sensor, or an ultrasonic flowmeter (10).

**Revendications**

**1.** Procédé de localisation d'un événement (28), en particulier d'une impulsion, dans un signal de capteur (26), dans lequel une fenêtre d'échantillonnage (32) incluant l'événement (28) est définie pendant une phase d'initialisation, dont la durée n'est que d'une fraction de celle du signal de capteur (26), dans lequel le signal de capteur (26) est échantillonné pendant une phase de fonctionnement à l'intérieur de la fenêtre d'échantillonnage (32) à une fréquence de travail ($f_A$), et le signal de capteur (26, 30) discret ainsi obtenu est évalué pour localiser l'événement (28), le signal de capteur (26) est échantillonné pendant la phase d'initialisation à une fréquence d'initialisation ($f_I$) inférieure à la fréquence de travail ($f_A$), pendant la phase d'initialisation, la durée du signal de capteur (26) est subdivisée en plusieurs fenêtres d'échantillonnage (34) de contrôle, le signal de capteur (26) dans les fenêtres d'échantillonnage (34) de contrôle est échantillonné à la fréquence d'initialisation ($f_I$) et ensuite la fenêtre d'échantillonnage (32) est définie comme étant cette fenêtre d'échantillonnage (34) de contrôle dans laquelle l'événement (28) est identifié,

**caractérisé en ce que**

le signal de capteur (26) est amplifié jusqu'à saturation, sur la base duquel il est évalué dans quelles des fenêtres d'échantillonnage (34) de contrôle l'amplitude du signal de capteur (26) dépasse un premier seuil ($A_{min}$), les autres fenêtres d'échantillonnage (34) de contrôle étant rejetées.

2. Procédé selon la revendication 1,
dans lequel le signal de capteur (26) est un signal de réception d'un transducteur ultrasonore (12, 14) d'un débitmètre à ultrasons (10).

3. Procédé selon la revendication 1 ou 2,
dans lequel l'amplification est réduite itérativement jusqu'à ce qu'il ne reste plus qu'une fenêtre d'échantillonnage (34) de contrôle ou au plus deux fenêtres d'échantillonnage (34) de contrôle et que l'amplitude du signal de capteur (26) passe au-dessous d'un second seuil ($A_{max}$).

4. Procédé selon la revendication 3,
dans lequel au cas où il ne reste plus qu'une fenêtre d'échantillonnage (34) de contrôle, la fenêtre d'échantillonnage (32) est définie comme étant ladite fenêtre d'échantillonnage (34) de contrôle.

5. Procédé selon la revendication 3,
dans lequel au cas où il reste encore deux fenêtres d'échantillonnage (34) lors du passage au-dessous du second seuil ($A_{max}$), la fenêtre d'échantillonnage (32) est définie de manière à inclure la zone transitoire entre ces deux fenêtres d'échantillonnage (34) de contrôle.

6. Procédé selon l'une des revendications précédentes,
dans lequel pendant la phase d'initialisation, l'événement (28) est localisé dans la fenêtre d'échantillonnage (32) et la fenêtre d'échantillonnage (32) est centrée autour de l'événement (28).

7. Capteur (10) pourvu d'un ensemble capteur (12, 14) pour détecter un signal de capteur (26) et d'un ensemble d'évaluation (22) pour évaluer le signal de capteur (26), l'ensemble d'évaluation (22) étant réalisé pour localiser un événement (28), en particulier une impulsion, dans le signal de capteur (26) par un procédé selon l'une des revendications précédentes.

8. Capteur selon la revendication 7,
dans lequel le capteur est un capteur optoélectronique de mesure de distance selon une méthode de temps de parcours de lumière, un capteur de niveau de remplissage ou un débitmètre à ultrasons (10).

## Figur 1

## Figur 2

Figur 3

Verstärkung /= 2

Verstärkung/= 2

Verstärkung/= 2

## Figur 4

$A_{max}$
$A_{min}$

34    28    34

Verstärkung /= 2

34    28    34    26

$A_{max}$
$A_{min}$

Verstärkung /= 2

34    28    26

$A_{max}$
$A_{min}$

Verstärkung /= 2

34    28    26

$A_{max}$
$A_{min}$

Verschieben auf
Übergangsbereich

32    28

## Figur 5

32    28

$A$

36    26

$i$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0797105 A2
- EP 2226615 A1
- EP 2818874 A1